# EUROPÄISCHE PATENTANMELDUNG

(11) **EP 1 076 002 A2**
(43) Veröffentlichungstag der Anmeldung: **14.02.2001**
(21) Anmeldenummer: 00116139.7
(22) Anmeldetag: 31.07.2000
(51) Int. Cl.: B62J 1/00

(54) **Fahrradsattel**

(30) Priorität: 12.08.1999 DE 19938042
(71) Anmelder: Urban, Viola Uljana, 87730 Bad Grönenbach (DE); Urban, Karl Jörg, 87730 Bad Grönenbach (DE)
(72) Erfinder: Urban, Viola Uljana, 87730 Bad Grönenbach (DE); Urban, Karl Jörg, 87730 Bad Grönenbach (DE)
(74) Vertreter: Zellentin, Rüdiger, Dr.

(57) **Zusammenfassung**

Die Erfindung betrifft einen Fahrradsattel bestehend aus einem am Rahmen eines Fahrrads festlegbaren Halter (1), einer Sitzdecke (2) aus einer Tragschale (3) mit Polsterungen (7), mit einer hinteren Sitzfläche (4) und mit einem vorderen nasenförmigen Vorsprung (5), der in einer Sattelspitze (6) endet und in Richtung der Sattelspitze (6) nach unten abgewinkelt ist. Die Erfindung weist zwei symmetrisch zur Längsachse (LA-LA) des Sattels waagerecht angeordnete Auflager (10) für die Sitzknochen eines Radfahrers auf, wobei die Auflager (10) die höchsten Erhebungen des Sattels darstellen und entlang gerader konvergierender Linien (SP-SP) verlaufen.

## Beschreibung

Die Erfindung betrifft einen Fahrradsattel.

Fahrradsättel sind weit bekannt. Bei den bekannten Fahrradsätteln mit geschlossener Sitzdecke werden die Weichteile des Radfahrers ganz gleich, ob er in einer vorgebeugten sportlichen oder in einer aufrechten bzw. zurückgelehnten Haltung auf dem Sitz Platz nimmt, mehr oder weniger stark gedrückt bzw. sogar geklemmt, was insbesondere beim längeren Sitzen zu Unbequemlichkeiten führt. Um dem Rechnung zu tragen, ist es bereits bekannt (WO 9914103 A1), in einem derartigen Fahrradsattel eine Aussparung im Perinalbereich vorzusehen, die aber zu keiner wirklichen Entlastung, sondern nur zu einer gewissen Verlagerung des Fett- bzw. Muskelgewebes führt, was ebenfalls Unbequemlichkeiten beim längeren Radfahren mit sich bringt. Ferner weist dieser bekannte Sattel einen am Rahmen eines Fahrrads festlegbaren Halter, eine Sitzdecke aus einer Tragschale mit Polsterungen, eine hintere Sitzfläche und einen vorderen nasenförmigen Vorsprung auf, der in einer Sattelspitze (6) endet und in Richtung der Sattelspitze (6) nach unten abgewickelt ist.

Durch die WO 9304907 A1 ist es bekannt, den nasenförmigen Vorsprung relativ zur Sitzfläche zu verstellen und den Sattel mit auswechselbaren Modulen auszubilden.

Aufgabe der Erfindung ist es, einen Sattel der eingangs genannten Art dahingehend zu verbessern, daß eine ausreichende Abstützung der Sitzknochen eines Fahrradfahrers bzw. einer Fahrradfahrerin sicherstellt und eine weitgehende Quetschung der benachbarten Muskel- und Fettgewebe vermieden wird.

Diese Aufgabe wird durch einen Fahrradsattel mit den Merkmalen des Anspruchs 1 gelöst. Vorteilhafte Ausgestaltungen des Fahrradsattels sind in den Unteransprüchen angeführt. Nachstehend wird die Erfindung anhand von Ausführungsbeispielen unter Bezug auf Zeichnungen näher erläutert. Es zeigt:
- Fig. 1, 2, 3: Seitenansichten von Ausführungsbeispielen eines Fahrradsattels;
- Fig. 4: eine Draufsicht auf einen Fahrradsattel;
- Fig. 5: einen Querschnitt entlang der Linie V-V in Fig. 4;
- Fig. 6: einen Querschnitt entlang der Linie VI-VI in Fig. 4;
- Fig. 7: ein weiteres Ausführungsbeispiel eines Fahrradsattels in Draufsicht;
- Fig. 8: den Fahrradsattel gemäß Fig. 7 in Seitenansicht;
- Fig. 9: ein Ausführungsbeispiel eines Fahrradsattels, wobei die Sitzfläche und der nasenförmige Vorsprung gelenkig miteinander verbunden sind, in Seitenansicht;
- Fig. 10: ein anderes Ausführungsbeispiel einer gelenkigen Verbindung zwischen der Sitzfläche und dem nasenförmigen Vorsprung;
- Fig. 11: einen Querschnitt durch eine Polsterung für einen Fahrradsattel.

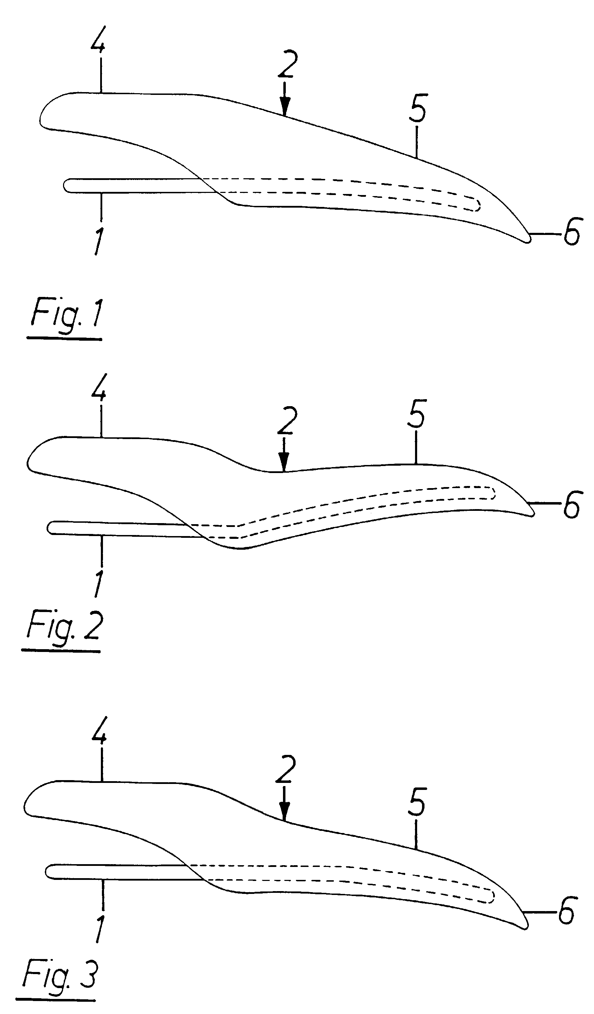

Die in den Fig. 1, 2 und 3 dargestellten Fahrradsättel weisen einen Halter 1 beliebig bekannter Bauart auf, der mittels beliebiger bekannter Befestigungselemente am Rahmen eines Fahrrads zumindestens höhenverstellbar anordenbar ist. Am Halter 1 ist eine Sitzdecke 2 auf beliebig bekannte Weise befestigt, die aus einer Tragschale 3 mit einer hinteren Sitzfläche 4 und einem vorderen nasenförmigen Vorsprung 5 besteht, der in einer Nasenspitze 6 mündet. Die Tragschale 3 kann ganz oder teilweise mit Polsterungen 7 versehen sein.

Bei dem in Fig. 1 dargestellten Ausführungsbeispiel geht vorzugsweise die waagerecht ausgeführte Sitzfläche 4 kontinuierlich in den nasenförmigen Vorsprung 5 über. Bei dem in Fig. 2 und Fig. 3 dargestellten Ausführungsbeispielen ist dieser Übergang diskontinuierlich ausgeführt, wobei bei dem in Fig. 3 dargestellten Ausführungsbeispiel ein stufenförmiger Übergang besteht. Bei den Ausführungsbeispielen gemäß Fig. 1 bis 3 ist gemeinsam, daß der nasenförmige Vorsprung 5 unterhalb der Ebene der Sitzfläche 4 angeordnet und abgewinkelt ist.

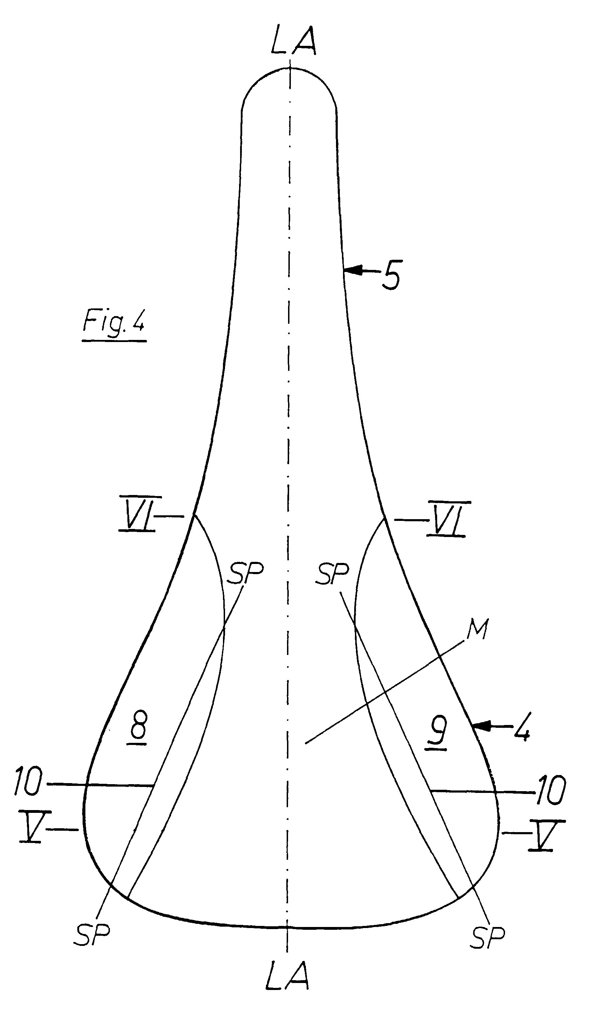

Wie aus Fig. 4 deutlich zu erkennen ist, weist die Sitzfläche 4 symmetrisch angeordnete Flanken 8 und 9 auf, in denen waagerecht ausgerichtete, entlang hier gerader oder auch leicht gebogener konvergierender Linien SP-SP ausgerichtete Auflager 10 bestehen. Die konvergierende Ausrichtung der Auflager 10 ist an einer Abrollbewegung der Beckenknochen ausgerichtet, die bei einer Bewegung eines Benutzers aus der aufrechten bzw. zurückgelehnten Sitzlage in eine nach vorne gebeugte (sportliche) Lage erfolgt. Zwischen den Auflagern 10, d. h. zwischen den Linien SP-SP, die gleichzeitig die höchsten Erhebungen des Sattels darstellen, ist eine über die gesamte Breite sich erstreckende Mulde M ausgeführt, die ausreichend Raum für das zwischen den Sitzknochen angeordnete Gewebe schafft, um dessen Quetschung oder gar Verlagerung sicher zu verhindern.

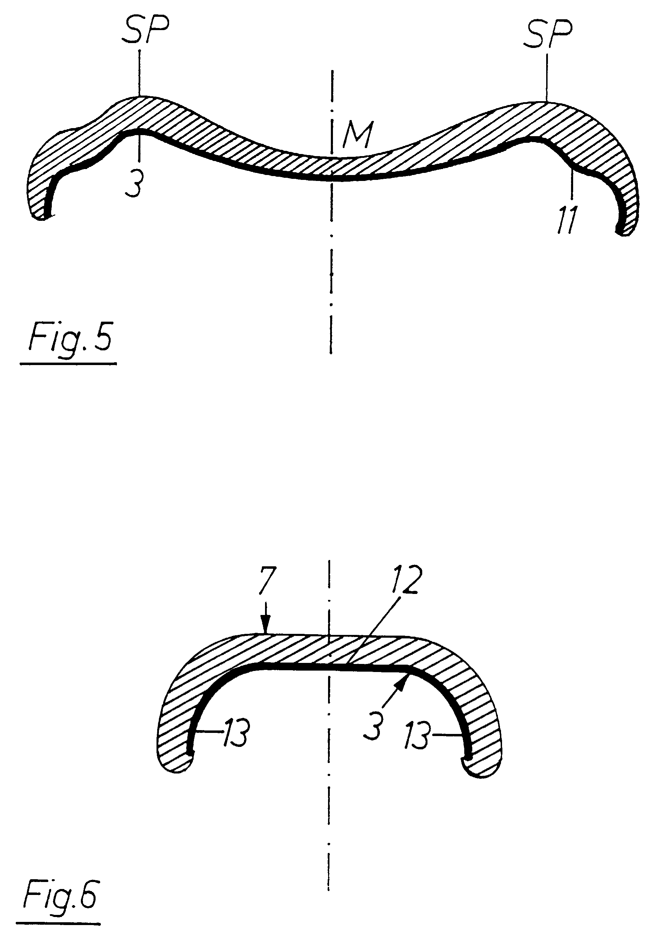

Wie aus Fig. 5 augenfällig zu ersehen ist, bilden die Auflager 10 über den Querschnitt der Sitzfläche 4 gesehen, die höchsten Linien SP-SP der Sitzfläche 4. Im Ausführungsbeispiel gemäß Fig. 5 weist die Tragschale 3 nach außen gerichtete Abstufungen auf, die auch in der auf der Tragschale 3 angeordneten Polsterung 7 ausgeführt sind (s. die linke Hälfte in Fig. 5) oder auch eine kontinuierliche Rundung aufweisen können (s. die rechte Hälfte in Fig. 5).

Aus Fig. 6 ist deutlich erkennbar, daß die Tragschale 3 mit oder ohne Polsterung 7 am nasenförmigen Vorsprung 5 eine ebene Oberfläche 12 aufweist, die in zwei bogenförmig gestaltete Seitenflanken 13 mit oder ohne Polsterung übergehen.

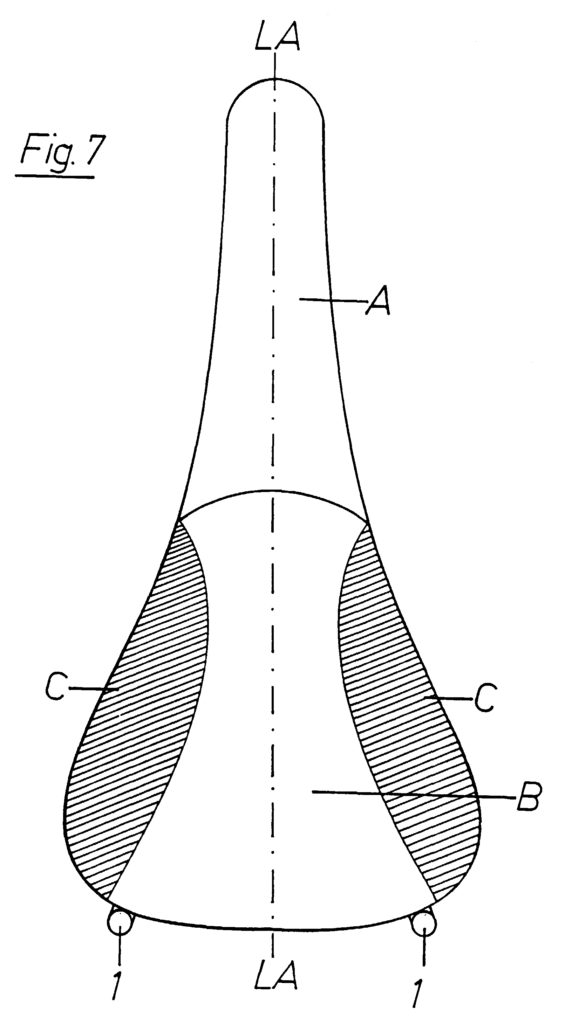

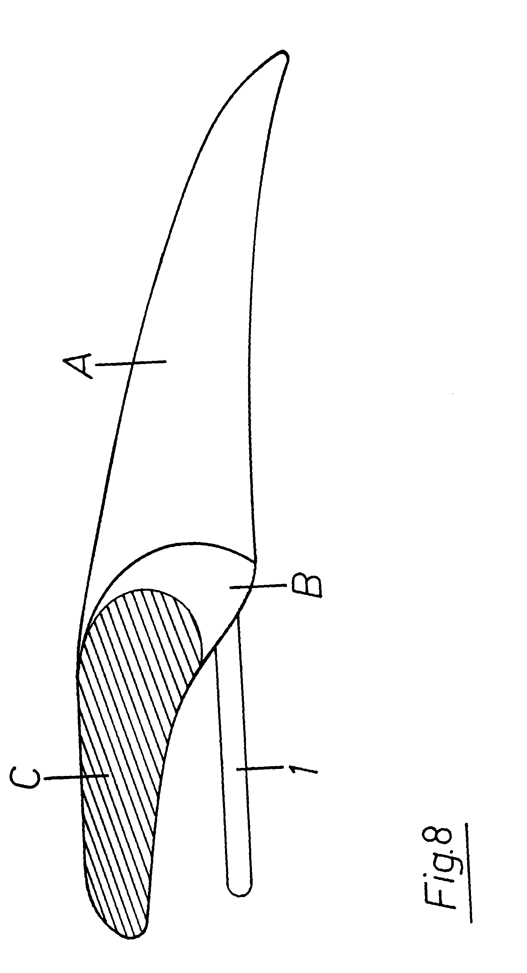

Im Ausführungsbeispiel gemäß Fig. 7 und 8 weist der Fahrradsattel einen separaten nasenförmigen Vorsprung als Modul A, ein separates Modul B mit seitlich angeordneten separaten Modulen C auf, die zusammen die Sitzfläche 4 bilden, die alle auf einem Halter 1, vorzugsweise auswechselbar, angeordnet sind. Bei Verwendung von insbesondere auswechselbaren Modulen C als Flanken 8 kann eine problemlose Anpassung an anatomisch bedingte Abstände der Sitzknochen von natürlichen Personen vorgenommen werden. Die Befestigung der einzelnen Module kann auf beliebige bekannte Weise beispielsweise durch Steckverbindungen mit und ohne Arretierung erfolgen.

Auch der Halter 1 kann als auswechselbares Modul gestaltet sein. Dies erlaubt es, hinsichtlich Form, Material und Federungsverhalten unterschiedliche Anpassungen vorzunehmen.

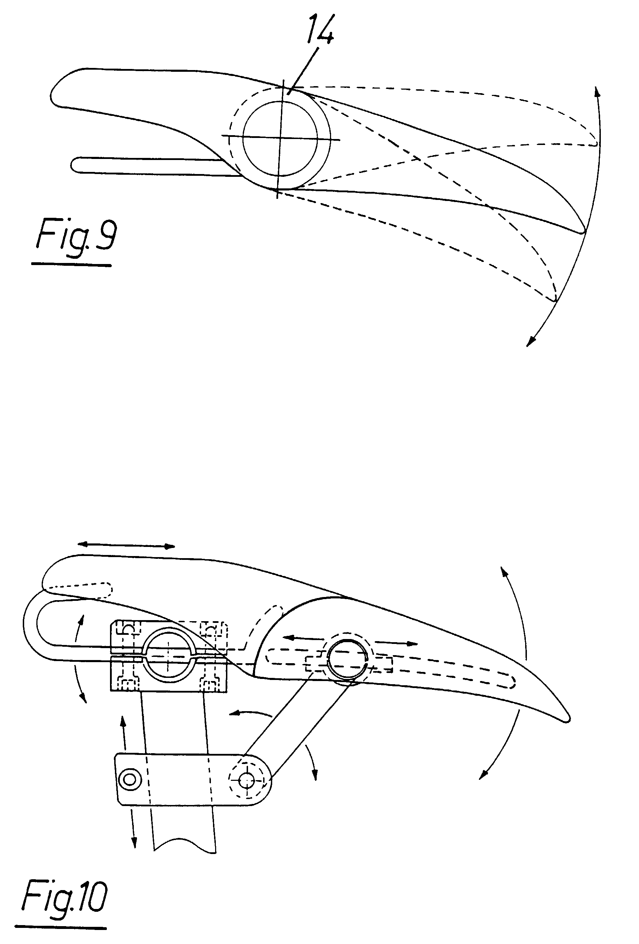

In Fig. 9 ist ein Fahrradsattel dargestellt, dessen nasenförmiger Vorsprung 5 über ein Gelenk 14 winkelverstellbar mit der Sitzfläche 4 verbunden ist. Eine derartige Verstellmöglichkeit erlaubt eine individuelle Anpassung an die anatomischen Bedingungen einer natürlichen Person einerseits und andererseits an die Fahrweise sportlich, d. h. vorne übergebeugt oder tourenmäßig, d.h. weitgehend aufrechtsitzend, möglich.

In Fig. 10 ist ein Ausführungsbeispiel dargestellt, daß eine mehrfache Verstellung von Sitzfläche 4 und nasenförmigem Vorsprung 5 einerseits gegeneinander und von jedem einzelnen Teil für sich allein, wie dies aus den gezeigten Pfeilen deutlich ersichtlich ist, ermöglicht. Selbstverständlich kann auch nur ein Teil dieser Bewegungsmöglichkeiten vorgesehen werden, wobei beliebige Kombinationen denkbar sind.

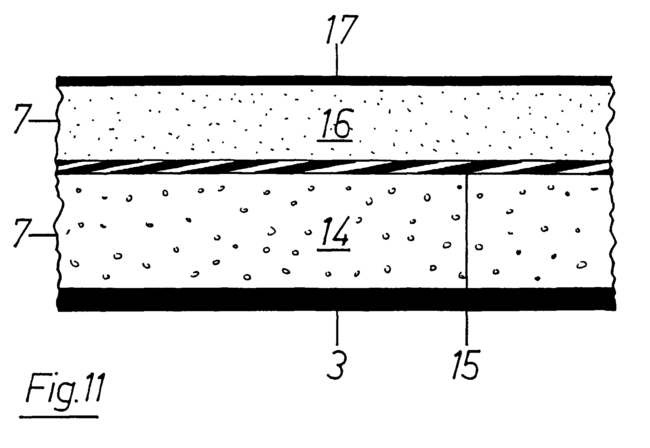

In Fig. 11 ist ein Querschnitt durch eine vorzugsweise Polsterung 7 wiedergegeben. Auf der Tragschale 3 ist zunächst eine Schicht 14 mit stark dämpfenden Eigenschaften als ein Teil der Polsterung 7 angeordnet. Diese Schicht 14 ist durch ein Versteifungselement 15 ganz oder teilweise überdeckt, wobei das Versteifungselement 15 starre oder auch eine Flexibilität erlaubende Eigenschaften zur Anpassung an verschiedene Dämpfungscharakteristika aufweisen kann. Auf dem Versteifungselement 15 ist dann eine weitere Schicht 16 angeordnet bzw. mit dem Versteifungselement 15 verbunden, die gleiche oder vorzugsweise andere z. B. weichere Eigenschaften als die Schicht 14 aufweisen kann. Vorzugsweise ist über dieser weiteren Schicht 16 ein Überzug 17 als Abdeckung vorgesehen, der aus einem beliebigen natürlichen oder künstlichen Material, z. B. Plastik, Leder oder Stoff oder Gummi bestehen und auch einen Schutz gegen unterschiedliche Wetterbedingungen bieten kann.

Da es zunehmend üblich ist, einen Fahrradsattel mit einem Schnellverschluß an einem Rahmen zu befestigen, können als Überzüge körperfreundliche auch eine Luftzirkulation ermöglichende Materialien verwendet werden, da der Sattel, wenn er nicht benötigt wird, abgenommen und so auch vor den Unbilden der Witterung und nicht nur gegen Diebstahl geschützt werden kann.

## Patentansprüche

1. Fahrradsattel bestehend aus:
- einem am Rahmen eines Fahrrads festlegbaren Halter (1),
- einer Sitzdecke (2) aus einer Tragschale (3) mit Polsterungen (7), mit einer hinteren Sitzfläche (4) und mit einem vorderen nasenförmigen Vorsprung (5), der in einer Sattelspitze (6) endet und in Richtung der Sattelspitze (6) nach unten abgewinkelt ist,
- zwei symmetrisch zur Längsachse (LA-LA) des Sattels waagerecht angeordnete Auflager (10) für die Sitzknochen eines Radfahrers, wobei die Auflager (10) die höchsten Erhebungen des Sattels darstellen und entlang gerader konvergierender Linien (SP-SP) verlaufen.

2. Fahrradsattel nach Anspruch 1,
dadurch gekennzeichnet, daß zwischen dem die Sitzfläche (4) bildenden Teil der Tragschale (3) und der Sattelspitze (6) des den nasenförmigen Vorsprung (5) bildenden Teils ein kontinuierlicher Übergang besteht.

3. Fahrradsattel nach Anspruch 1,
dadurch gekennzeichnet, daß zwischen dem die Sitzfläche (4) bildenden Teil der Tragschale (3) und der Sattelspitze (6) des den nasenförmigen Vorsprung (5) bildenden Teils ein diskontinuierlicher Übergang besteht.

4. Fahrradsattel nach Anspruch 3,
dadurch gekennzeichnet, daß der Übergang stufenförmig ist.

5. Fahrradsattel nach einem der Ansprüche 1 bis 4,
dadurch gekennzeichnet, daß zwischen den Flanken (8) eine zur Längsachse (LA-LA) des Sattels symmetrische Mulde (M) besteht, die sich über die gesamte Breite der Tragschale (3) zwischen den Scheitelpunkten (SP) der rechten und linken Flanke (9) erstreckt.

6. Fahrradsattel nach einem der Ansprüche 1 bis 5,
dadurch gekennzeichnet, daß die Tragschale (3) und/oder die Polsterung (7) im Querschnitt durch die Flanken (8) stufenförmig ausgestaltet ist.

7. Fahrradsattel nach einem der Ansprüche 1 bis 6,
dadurch gekennzeichnet, daß die Oberfläche (12) des nasenförmigen Vorsprungs (5) abgeflacht ausgestaltet ist.

8. Fahrradsattel nach einem der Ansprüche 1 bis 7,
dadurch gekennzeichnet, daß er aus mehreren auswechselbaren Modulen (A, B, C) besteht.

9. Fahrradsattel nach einem der Ansprüche 1 bis 8,
dadurch gekennzeichnet, daß der nasenförmige Vorsprung (5) relativ zur Sitzfläche (4) winkelverstellbar angeordnet ist.

10. Fahrradsattel nach einem der Ansprüche 1 bis 9,
dadurch gekennzeichnet, daß der nasenförmige Vorsprung (5) relativ zur Sitzfläche (4) höhenverstellbar angeordnet ist.

11. Fahrradsattel nach einem der Ansprüche 1 bis 10,
dadurch gekennzeichnet, daß innerhalb der Polsterung (7) mindestens ein Versteifungselement (15) angeordnet ist.
